# EUROPEAN PATENT SPECIFICATION

(11) **EP 2 016 741 B1**
(45) Date of publication and mention of the grant of the patent: **10.02.2010**
(21) Application number: 06761970.0
(22) Date of filing: 04.05.2006
(51) Int. Cl.: H04L 29/08

(54) **METHOD FOR MANAGING SERVICE REQUESTS VIA A MOBILE STATION OF A DIGITAL MOBILE COMMUNICATIONS NETWORK**
VERFAHREN ZUR VERWALTUNG VON DIENSTANFORDERUNGEN ÜBER EINE MOBILSTATION EINES DIGITALEN MOBILKOMMUNIKATIONSNETZES
PROCÉDÉ DE TRAITEMENT DE REQUÊTES DE SERVICE PAR L'INTERMÉDIAIRE D'UNE STATION MOBILE D'UN RESEAU DE COMMUNICATIONS MOBILE NUMéRIQUE

(43) Date of publication of application: 21.01.2009
(73) Proprietor: PEOPLEGEOCONTACT, Sophia Antipolis 06560 Valbonne (FR)
(72) Inventor: POVEDA, Philippe, F-06200 Nice (FR)
(74) Representative: Hirsch & Associés
(86) International application number: PCT/EP2006/005324
(87) International publication number: WO 2007/128336

(56) References cited:
- EP-A- 0 809 117
- GB-A- 2 382 505
- US-A1- 2002 068 549
- US-A1- 2005 075 116
- US-B1- 6 684 078

## Description

### FIELD OF THE INVENTION

This invention generally relates to the field of service requests management, for users of mobile station of digital mobile communications networks. It further relates to satellite positioning systems.

### BACKGROUND OF THE INVENTION

The following comments on the prior art are partly based on articles available at the online Wikipedia encyclopedia (see http://en.wikipedia.org/).

One knows the Global Positioning System, usually called GPS, which is a fully-functional satellite navigation system. GPS involves a number of satellites, which broadcasts precise radio timing signals to GPS receivers, allowing them to accurately determine their location (longitude, latitude, and altitude) in various weather conditions and anywhere on Earth. Also known is the concept of the future Galileo positioning system.

A number of devices have been developed based on geo-positioning using a GPS receiver. For instance, one knows GPS tracking units, which are devices that use the GPS to determine the precise location of a vehicle, person, or other attached asset. The recorded location data can be stored within the tracking unit, or may be transmitted to a central location, or internet-connected computer, using a cellular, radio, or satellite modem embedded in the unit. This allows the asset location to be displayed on street-level map in real-time; using either web browser based tools or customized software.

One known type of tracker combines the global capability of determining one's position through GPS with the capability to send the coordinates through instant text messaging, using SMS or competing standard services. GPS tracking devices can be useful for tracking an animal or recovering a stolen car.

As another example, in U.S. Pat. No. 6,131,067, a client-server based system is described in which the location of a tracking device is determined using GPS information. This location is then reported to a user via the Internet.

In a further example (see EP-A1-1 506 596), it is intended to solve the problem of a simultaneous surveillance of a passive reception antenna device being a portion of a dedicated surveillance and tracking system forming a transponder system communicating with a main unit. Any break or a short-circuit in the antenna itself or in a feeder connecting the active antenna, for instance, to a GPS receiver or corresponding device serving the surveillance and tracking system is noticed and generates an interrupt to the system controller of the system. This will occur whenever the efficiency of the passive reception antenna is seriously affected. This interrupt in turn generates a message over the Short Message Service (SMS), which is sent generally via a mobile telephone access to a predefined address informing a main remote controller unit that the performance of the GPS antenna/feeder cable in the surveillance and tracking system has degraded. Such a message tells that the localizing system no longer can deliver proper coordinate information and the system may be provided with new parameters regarding the system function.

Next, the so-called "Columba" phone-bracelet has been developed by Medical Intelligence to prevent disappearance among Alzheimer's patients. Said bracelet combines the functions of a "handsfree" mobile phone, a GPS positioning system and an alert system that detects any wandering outside of a security zone. The Columba device allow thus to locate a person who has strayed a pre-defined zone, thereby reducing the risks associated with Alzheimer's patients' wanderings. Here the solution developed requires a specific phone-bracelet.

Furthermore, FR-A-2 873 260 is directed to methods of interpersonal localization, involving a mobile station in a digital mobile communications network having a location enabling server. The location enabling server can be based on characteristics of the network (for instance using technologies such as Cell-ID, AOA, TDOA or NMR) or on a third system of localization such as GPS. The proposed method makes it possible for a first owner of a mobile phone to locate another mobile terminal user, subjected to an exchange between the terminals. Here, two users are involved. Such methods are not intended to allow a user to face an emergency situation.

EP-A-0 809 117 discloses an emergency locator device includes a wireless receiver interface receiving digital location data indicating a current location, and a wireless telephone transceiver sending the digital location data to a called station via a wireless telephone communications system in response to an emergency trigger. A method is disclosed which includes the steps of determining a current location from wireless location data received from a wireless location detection system, initiating a first telephone call using a wireless telephone in communication with a wireless telephone communication system and accessing a called station in response to an emergency trigger, and supplying digital data identifying the determined current location to the called station during the first telephone call.

As a summary, a number of services can be provided to a user using GPS techniques. In this respect, GPS tracking methods often impose specific technical devices or devices provided with substantial memory for implementing typical positioning applications (for example: visualizing maps). All the more, such methods raise concerns about personal privacy, as personal data (positioning data) may possibly be accessed by a third person.

There is therefore a need for a method and device for managing service requests, which allows for providing assistance to a user who requests it. The solution should be simple in use and not require sophisticated devices, that is, should be adapted to any user. Yet, the solution should remain under control of the user so as to preserve its privacy and further make it possible to minimize the risk of hijack of personal data.

All the more, to the best of their knowledge, the prior art, whilst suggesting some features and some variations relevant to application using a video stream in general, the prior art has not disclosed some of the highly advantageous features of the present invention discussed herein.

### SUMMARY OF THE INVENTION

The invention therefore proposes a method for managing service requests via a mobile station of a digital mobile communications network. The method comprises steps of connecting to a receiver allowing for receiving signals from a satellite positioning system data, such as the global positioning system or GPS. Thus, this solution only requires a mobile station and a satellite positioning data receiver. No specifically designed device is therefore required. The solution is therefore suitable for any user.

The method also comprises storing in the mobile station positioning data obtained from said signals received from the satellite positioning system. The steps of connecting and storing are performed while allowing said mobile station to originate outgoing calls and receive incoming calls, for safety reasons. Hence, in case of emergency, the user can still use its mobile station, for example for making a phone call and thus alerting someone or receiving an incoming call from an emergency entity.

The method further comprises a step of sending via said digital mobile communications network a signal requesting a service centre, upon user request. Said signal comprises an identifier of the mobile station and a selection of positioning data stored prior to the user's request. As said signal is sent upon the user's request, the solution according to the invention remains under control of the user. Furthermore, positioning data are most of time locally stored (in the mobile station), while only a selection of positioning data are likely to be stored on the service center, upon the user's request. Accordingly, the risk of illicit or unscrupulous use of said data is thus limited compared with other known schemes.

Said service centre is adapted for deploying automated predefined services in response to the sent signal. Said services are typically predefined by the user from its mobile station or by connecting to a dedicated Internet web site. The user may hence customize the service center so as to allow a third person to be contacted upon request. The user can however not be "tracked" by an unauthorized third person. As said, only a selection of positioning data are likely to be stored in the service centre, at least temporarily. Suitable actions may then be carried out thanks to the data stored in the service center. For example, a third person authorized according to predefined services can be provided with the last known positioning data of the mobile station. Furthermore, a functionally of the mobile station (such as an incoming call or recording) can be locally or remotely activated, upon reception of a response signal from the service center. Hence, in case of emergency, specific details of the user's situation can be recorded, in addition to positioning data. Such details may later help in taking suitable actions.

In some embodiments, the method according to the invention may comprise one or more of the following features:
- said mobile station comprises said receiver;
- the step of connecting to said receiver comprises setting up a radio link to said receiver, said receiver being external to said mobile station;
- the method according to the invention further comprises a step of activating a functionality of said mobile station, concomitant with or subsequent to said step of sending a signal to said service centre;
- the functionality activated is an incoming call;
- the functionality activated is an image and/or sound recording functionality;
- the step of deploying comprises a step of sending from the service centre to the mobile station a response signal in response to said requesting signal, the activation step being triggered upon receiving said response signal;
- the method according to the invention further comprises a step of configuring a hot key or shortcut for activating said user request for sending the signal requesting the service centre;
- the method according to the invention further comprises steps of configuring services of the service centre from the mobile station; and sending a corresponding signal comprising at least an identifier for the mobile station and information related to service options;
- the method according to the invention further comprises a step, prior to the step of sending said requesting signal, of suggesting to the user the sending of said requesting signal, in the case of detecting a loss of signals from the digital mobile communication network; signals from said satellite positioning system; or connection to the receiver, the user request at the step of sending said requesting signal then being acceptance of the suggestion;
- the method according to the invention further comprises the steps, prior to the step of sending said requesting signal, of computing a distance deviation from stored positioning data and reference positioning data; and suggesting to the user sending of said requesting signal, if said deviation exceeds a threshold value, the user request at the step of sending said requesting signal then being acceptance of the suggestion;
- the method according to the invention further comprises a step of validating frequency parameterization for connecting to the receiver.

The invention is also directed to a method for managing service requests via a mobile station of a digital mobile communications network, comprising the steps of:
- setting up a radio link from said mobile station to a receiver, said receiver being external to said mobile station and receiving signals from a satellite positioning system data;
- storing positioning data obtained from said signals received from the satellite positioning system;
in which the steps of connecting and storing are performed while allowing said mobile station to originate outgoing calls and receive incoming calls, the method further comprising steps of:
- sending from said mobile station via said digital mobile communications network a requesting signal to a service centre, upon user request,
   in which said signal comprises:
   - an identifier of the mobile station; and
   - a selection of positioning data stored prior to the user's request, and
- receiving a response signal sent from the service centre in response to said requesting signal.

In addition, the invention further proposes a mobile station application adapted to be installed in a mobile station and designed to carry out the steps of:
- connecting from said mobile station to a receiver adapted for receiving signals from a satellite positioning system data;
- storing in said mobile station positioning data obtained from said signals received from the satellite positioning system;
in which the steps of connecting and storing are performed while allowing said mobile station to originate outgoing calls and receive incoming calls,
- sending from said mobile station via said digital mobile communication network a requesting signal to a service centre, upon request of the user,
   said requesting signal comprising:
   - an identifier of the mobile station; and
   - a selection of positioning data stored prior to the user's request,
- receiving a response signal sent from the service centre in response to said requesting signal.

Moreover, the invention proposes a mobile station comprising said mobile station application.

The foregoing has outlined rather broadly the features and advantages of the present invention in order that the detailed description of the invention that follows may be better understood. Additional features and advantages of the invention will be described hereinafter which form the subject of the claims of the invention. It should be appreciated by those skilled in the art that the conception and specific embodiments disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figure. It is to be expressly understood, however, that the figure is provided for the purpose of illustration and description only and is not intended as a definition of the limits of the present invention.

### BRIEF DESCRIPTION OF THE DRAWING FIGURE

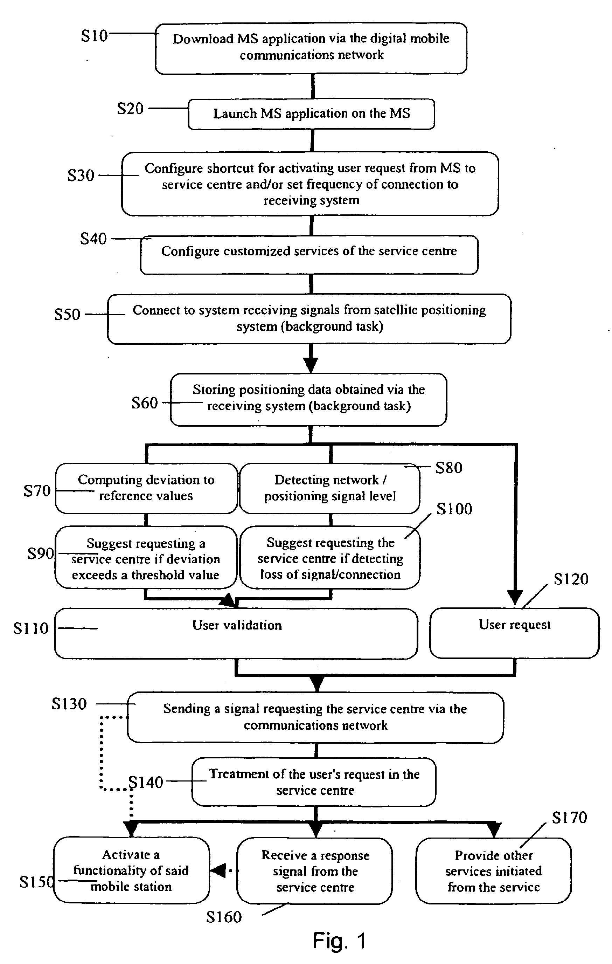

For a more complete understanding of the present invention, reference is now made to the following description taken in conjunction with the accompanying drawing showing (FIG. 1): a schematic diagram illustrating steps of the method according to an embodiment of the invention.

### DETAILED DESCRIPTION OF PREFERRED EMBODIMENTS

In the preferred embodiment to be discussed in the following, the mobile station is a mobile telephone and the satellite positioning data receiver is a GPS receiver. It should however be understood that other embodiments may include other types of mobile stations, such as a personal digital assistant, and other type of satellite positioning system, such as the future Galileo positioning system.

In practice, a user who possesses a mobile telephone together with a GPS receiver may subscribe to services provided by a service centre. A number of services may be provided to the user by the service centre, as will be detailed later.

Said mobile phone communicates via a cellular network of base stations using wireless radio wave transmission. In addition to the standard telephone functions, said mobile phone may support additional services such as short message service (SMS) for text messaging, packet switching for accessing to the Internet, and multimedia messaging service (MMS) for sending and receiving photos and video.

Preferably, said mobile phone comprises one or more of the following features/functionality:
- its connectivity comprises Bluetooth and it supports mobile applications in Java (J2ME);
- 3G phone,
- triband (900/1800/1900 MHz) or Quadriband 850/900/1800/1900 MHz
- cameraphone, which can take digital photographs in a resolution up to more than one Megapixels,
- it supports WAP 2.0, GPRS and UMTS,
- its internal memory is of a few Megabytes, preferably expansible.

The GPS receiver may communicate using any protocols existing or to come such as the NMEA 0183 or 2000, etc., as known in the art. For instance, the receiver calculates its real-time position (latitude, longitude, elevation), and precise time, using the so-called process of trilateration, after measuring the distance to at least four satellites of the GPS system, by comparing the satellites coded time signal transmissions.

In particular, a receiver that could be used in the method according to the invention may show one or more of the properties listed in table 1 below:

**Table 1: Example of a suitable GPS receiver**

| General Properties | |
|---|---|
| Frequency | L1, 1575.42 MHz |
| C/A: | 1.023 Mhz chip rate |
| Channels: | 12 or 20 Channels all-in-view tracking |
| DGPS Source: | SBAS (WAAS/EGNOS) |
| System Back Up: | Built-in Lithium-ion rechargable battery |
| Data-logger: | Capacity for storing 30,000 records |
| | |

| Interface: | |
|---|---|
| Connection: | Host Platform via Bluetooth (Class 3) Serial Port Profile |
| | Default: NMEA-0183 (v2.20)-GGA, GLL, GSA, GSV, |
| Protocol: | RMC, VTG |
| Output format: | GGA(1 sec), GSA(5 sec), GSV(5 sec), RMC(1 sec), VTG(1 sec) |
| Antenna Type: | Built-in or external antenna |
| Position: | 10 meters RMS, 25 meters CEP, without SA |
| Velocity: | 0.1 meters/second, without SA |
| Time: | 1 microsecond synchronised to GPS time |
| | |
| Acquisition Time: | Open Sky, Stationary |
| Reacquisition: | 0.1 seconds on average |
| Cold Start: | < 45 seconds on average |
| Warm Start: | < 38 seconds on average |
| Hot Start: | < 8 seconds on average |
| | |

| Dynamic and Environmental Conditions: | |
|---|---|
| Altitude: | < 18,000 meter |
| Velocity: | < 515 meter/second |
| Acceleration: | < 4g |
| Operating Temperature: | -20 to +60 degrees Celcius |
| Jerk: | 20 m/second3 |
| Relative Humidity: | 5% to 95%, non-condensing |
| | |

| Power: | |
|---|---|
| Built-in rechargeable battery and DC input charging protection circuit | |
| Operation Time: | > 10 hours, full charge, continuous operation mode or |
| | >20 hours, in programmable trickle power mode |

One should however keep in mind that any Bluetooth GpS receiver available on the market could be contemplated.

In reference to FIG. 1, the flowchart diagram shows a first step S10, wherein the user proceeds to download a mobile station application via the digital mobile communications network. Notice that the user may subscribe to said services before, after or by downloading said application. The application type is typically chosen so as to be compatible with technical features (such as the operating system) of the mobile phone. Hence, the application is adapted to be suitably installed in the mobile phone, amongst other application.

The application may have been developed using a virtual machine and use a set of standard application programming interfaces (APIs). In a variant, said application has such underlying behaviors that it is adapted for carrying out the steps of the method according to the invention.

Furthermore, the application software may use one or more of the following standard functionalities:
- SMS / MMS
- Bluetooth
- Wireless
- WAP / GPRS / UMTS
- Key pad management
- Mobile Station Graphical Resources
- Internal GPS Receiver

Moreover, for safety reasons, the application may reside at an obfuscated state in the mobile station, so as to prevent from easy decompilation.

At step S20, the user launches the application, for example, by selecting the convenient icon/option in an easy-to-use menu screen of the mobile phone.

Typically, after launching the application for the first time or later upon selecting the suitable option, the user is invited to configure options of the application. Amongst the configurable options, the user may proceed to configure (step S30) a hot key or shortcut for activating a request for sending a signal requesting the service centre. The hot key might else be configured using a standard function implemented in the mobile phone. The hot key may for instance be a dedicated key or a simple combination or sequence of keys in the keypad.

The method may further comprise a step of validating (step S30) a frequency parameter for connecting to the GPS receiver. Compared with usual tracking devices, positioning data can thus be refreshed according to a rate adapted for the specific purposes of the invention, that is, for making it possible to later retrieve the useful positioning information, if necessary. For example, as no tracking is desired, a rate of or 0.01 - 1 connection per second is convenient (less than 0.5 would be sufficient). A low rate of connection (0.01 - 0.1) allows for saving power and CPU resources. Accordingly, the extra amount of CPU resources or power is not significant. Notice that for some applications, one connection each 5 minutes would be sufficient, as will be exemplified later.

At step S40, the user may configure customized services of the service centre. To this aim, the application may propose an interactive menu through which the user is invited to input contact's phone numbers to be called/requested by the service centre or select predefined services to be carried out upon requests. Options selected by the user are then preferably stored on a local memory, so as to allow for a simpler subsequent edition of the options. After editing the options, the user can validate them, which leads to sending (step S40) a corresponding signal (such as an SMS or such as a web connection). Said signal comprises at least an identifier for the mobile station as well as information related to the previously edited service options.

Other options might be edited by the user, such as storing reference positioning data, e.g. related to a journey or destination.

At step S50, after starting the GPS receiver, the user may activate a normal mode of operation of the application, during which the application asks the mobile phone to connect to the GPS receiver. The GPS receiver itself receives signals from the satellite positioning system. To achieve this, a radio link is set up to the (external) GPS receiver. Preferably, the connection to the receiver uses bluetooth, e.g. a wireless personal area networks. Bluetooth provides an advantageous way to connect and exchange information between the mobile phone and the receiver. The range Depending on the power class of the devices involved, connection up to 100 meters can be contemplated.

In a preferred embodiment, the user makes use of a combo pack including both the GPS receiver and the mobile phone, which allows for maintaining a constant and small distance between both devices. Thus, only a low power class is required in this case.

In this case, the communication protocol may make use of the Bluetooth stack included in the handset operating system. The software features may rely on Bluetooth functionalities and libraries included in the handset operating system.

In another embodiment, the GPS receiver is comprised in the mobile phone and can communicate with the mobile phone using any suitable connection such as a wire connection.

At step S60, positioning data obtained from the GPS signals received from the satellite positioning system are stored on the mobile phone memory. In the case of an external GPS receiver, the computation of positioning information is performed by the receiver and transmitted to the mobile phone application. In case of an internal GPS chipset, computation tasks may possibly be carried out by the application itself.

The steps of connecting and storing are performed while allowing the mobile phone to originate outgoing calls and receive incoming calls, should it be for safety reasons.

Then, at step S130, the method according to the invention may comprise, upon user request, sending from the mobile communication via the communication network a signal requesting the service centre. Said signal may for instance correspond to a single SMS (easy to implement), comprising information related to an identifier of the mobile station (such as:the phone number) and a selection of positioning data, as stored prior to the user's request. Said signal is typically sent in case of danger or difficulty, using the activated hot key, for example when the user is lost. As already said, only a selection of data is sent to the centre, punctually, so as to prevent from misuse of said data.

In addition, said application might be configured so as to store only a limited amount of positioning data in memory. Corresponding options may for example be edited by the user from the menu. The user's privacy is thereby protected from unscrupulous inspection of said data in the mobile phone. The positioning data may further be locally stored in unreadable or encrypted fashion.

The signal sent to the service centre may further comprise parameters related to the user's options concerning the type of service requested, so as to ensure that up-to-date services will be carried out. For instance, this allows for facilitating last minute changes in the user's preferences.

In this respect, the method comprises a step of deploying one or more automated predefined services (step S140 - S 170). Hence, receiving the signal at the service center triggers suitable service or action, according to the user's service options (step S140 - S170).

Such an action or service may for example be the sending of an SMS to or the setting up of a call by a person authorized by the user. Preferably, the selection of positioning data is concomitantly sent to the authorized person. Said positioning data may for instance be sent according to a format interpreted thanks to a geographical information system (for example via MMS, including various map focus levels).

In addition, the deploying step may comprise sending a response signal (step 160) from the service centre, in response to the requesting signal. Said response signal may in turn, upon reception at the mobile phone, activates a functionality of the mobile phone, according to user's option.

In a variant, said functionality may be triggered directly by the application, upon the user's request, so as to improve the efficiency of the process.

For some application, however, it might be more convenient to activate said functionality only upon receiving of the response signal.

Therefore, the application may include a default behavior (yet user configurable), according to which some of the possible functionalities are directly triggered while some other functionalities are only activated upon reception of the response signal.

Said functionalities may include sound recording or taking pictures, so as to help in subsequent investigations, if necessary. Moreover, the rate of connections to the GPS receiver may then switch to a predefined rate (typically higher, so as to make subsequent investigations more accurate).

Preferably, the method may comprises, prior to the step of sending said requesting signal, a step of computing (see S70) a distance deviation from the above mentioned reference positioning data: Computing said deviation is performed by the application as a background task.

Then, it might be suggested (at step S90) to send said requesting signal, if said deviation exceeds a threshold value. This allows for monitoring one's journeys or movement.

As an example, the method according to the invention may further comprise steps of:
- locally storing at a given rate (for example each 5 minutes) positioning system data and storing in memory a selection of said positioning data, for example corresponding to the last 6 hours (that is, corresponding to a hiking);
- computing (step S70) as a background task a distance deviation from the above reference positioning data (corresponding to a given predefined area or reference hiking trip)
- suggesting (step S90) to send said requesting signal, if said deviation exceeds a threshold value so as to allow for monitoring one's hiking trip.

A similar suggestion of sending the requesting signal may further occur in other circumstances (step S100). For example, this can occur in the case of detecting (step S80) a loss of:
- signals from the digital mobile communications network;
- signals from said satellite positioning system; or
- connection to the receiver.

Hence, upon approving the suggestion, the user makes it possible to record in a remote place the last known positioning data before the loss effectively occurs. In a variant, said positioning data may be sent without user's approbation but according to the user's service options.

The method may further, in another embodiment, comprise a step of sending a selection of data (for example positioning data) relating to peripheral devices in communication with said mobile station (for instance radio linked). Said peripheral devices may also comprise a mobile station and GPS receiver, the mobile station being provided with a similar application.

The invention is not limited to the preferred embodiments described above, in reference to the drawings. In particular, some of the computational functions or features of the satellite positioning data receiver may be implemented in the mobile station application/mobile station. Accordingly, the receiver may in fact restrict to a GPS Receiver chipset, board or module. In addition, a variety of other services might be deployed at the deploying step, such as telehealth and, in particular, health advice by telephone.

## Claims

1. A method for managing service requests via a mobile station of a digital mobile communications network, comprising the steps of:
- connecting (S50) via said mobile station to a receiver adapted for receiving signals from a satellite positioning system data;
- storing (S60) in the mobile station positioning data obtained from said signals received from the satellite positioning system;
in which the steps of connecting and storing are performed while allowing said mobile station to originate outgoing calls and receive incoming calls,
the method further comprising the steps of:
- sending (S130) from said mobile station via said digital mobile communication network a requesting signal to a service centre, upon request of the user,
said requesting signal comprising:
- an identifier of the mobile station; and
- a selection of said positioning data stored prior to the user's request, and
- deploying (S 140 - 170) from said service centre an automated predefined service upon receiving the requesting signal.

2. The method according to claim 1, in which said mobile station comprises said receiver.

3. The method according to claim 1, in which the step of connecting to said receiver comprises setting up a radio link to said receiver, said receiver being external to said mobile station.

4. The method according to any one of claims 1-3, **characterized in that** the method further comprises a step of activating (S 150) a functionality of said mobile station, concomitant with or subsequent to said step of sending (S 130) a signal to said service centre.

5. The method according to claim 4, **characterized in that** the functionality activated is an incoming call.

6. The method according to claim 4, **characterized in that** the functionality activated is an image and/or sound recording functionality.

7. The method according to claim 4, 5 or 6, **characterized in that** the step of deploying comprises a step of sending (S160) from the service centre to the mobile station a response signal in response to said requesting signal, the activation step being triggered (S150) upon receiving said response signal.

8. The method according to any one of claims 1-7, **characterized in that** the method further comprises a step of configuring (S30) a hot key or shortcut for activating said user request for sending the signal requesting the service centre.

9. The method according to any one of claims 1-8, **characterized in that** the method further comprises steps of:
- configuring (S40) services of the service centre from the mobile station; and
- sending (S40) a corresponding signal comprising at least an identifier for the mobile station and information related to service options.

10. The method accorded to any one of claims 1-9, **characterized in that** the method further comprises a step, prior to the step of sending said requesting signal, of suggesting (S100) to the user the sending of said requesting signal, in the case of detecting (S80) a loss of:
- signals from the digital mobile communication network;
- signals from said satellite positioning system; or
- connection to the receiver,
the user request at the step of sending said requesting signal then being acceptance of the suggestion.

11. The method according to any one of claims 1-10, **characterized in that** the method further comprises the steps, prior to the step of sending said requesting signal, of:
- computing (S70) a distance deviation from stored positioning data and reference positioning data; and
- suggesting (S90) to the user sending of said requesting signal, if said deviation exceeds a threshold value, the user request at the step of sending said requesting signal then being acceptance of the suggestion.

12. The method according to any one of claims 1-11, **characterized in that** the method further comprises a step of:
- validating (S30) frequency parameterization for connecting to the receiver.

13. A method for managing service requests via a mobile station of a digital mobile communications network, comprising the steps of:
- setting up (S50) a radio link from said mobile station to a receiver, said receiver being external to said mobile station and receiving signals from a satellite positioning system data;
- storing (S60) in said mobile station positioning data obtained from said signals received from the satellite positioning system;
in which the steps of connecting and storing are performed while allowing said mobile station to originate outgoing calls and receive incoming calls, the method further comprising steps of:
- sending (S130) from said mobile station via said digital mobile communications network a requesting signal to a service centre, upon user request,
in which said signal comprises:
- an identifier of the mobile station; and
- a selection of said positioning data stored prior to the user's request,
- receiving (S160) a response signal sent from the service centre in response to said requesting signal.

14. A mobile station application adapted to be installed in a mobile station and designed to carry out the steps of:
- connecting (S50) from said mobile station to a receiver adapted for receiving signals from a satellite positioning system data;
- storing (S60) in said mobile station positioning data obtained from said signals received from the satellite positioning system;
in which the steps of connecting and storing are performed while allowing said mobile station to originate outgoing calls and receive incoming calls,
- sending (S130) from said mobile station via said digital mobile communication network a requesting signal to a service centre, upon request of the user,
said requesting signal comprising:
- an identifier of the mobile station; and
- a selection of said positioning data stored prior to the user's request,
- receiving (S160) a response signal sent from the service centre in response to said requesting signal.

15. A mobile station comprising a mobile station application according to claim 14.

## Patentansprüche

1. Verfahren zum Verwalten von Dienstanforderungen über eine Mobilstation eines digitalen Mobilkommunikationsnetzes, wobei das Verfahren die folgenden Schritte umfasst:
- Verbinden (S50) - über die Mobilstation - mit einem Empfänger, der dafür geeignet ist, Signale von einem Satelliten-Positionsbestimmungssystem zu empfangen;
- Speichern (S60) - in der Mobilstation - von Positionsbestimmungsdaten, die aus den Signalen gewonnen werden, die von dem Satelliten-Positionsbestimmungssystem kommend empfangen wurden;
wobei die Schritte des Verbindens und Speicherns ausgeführt werden, während es der Mobilstation gestattet wird, abgehende Rufe zu generieren und ankommende Rufe zu empfangen,
wobei das Verfahren des Weiteren die folgenden Schritte umfasst:
- Senden (S130) - von der Mobilstation über das digitale Mobilkommunikationsnetz - eines Anforderungssignals an ein Dienste-Zentrum auf Aufforderung des Nutzers,
wobei das Anforderungssignal Folgendes umfasst:
- einen Identifikator der Mobilstation; und
- eine Auswahl der Positionsbestimmungsdaten, die vor der Aufforderung des Nutzers gespeichert wurden, und
- Anwenden (S140 - 170) - von dem Dienste-Zentrum aus - eines automatisierten zuvor festgelegten Dienstes bei Empfang des Anforderungssignals.

2. Verfahren nach Anspruch 1, wobei die Mobilstation den Empfänger umfasst.

3. Verfahren nach Anspruch 1, wobei der Schritt des Verbindens mit dem Empfänger das Einrichten einer Funkstrecke zu dem Empfänger umfasst, wobei der Empfänger sich außerhalb der Mobilstation befindet.

4. Verfahren nach einem der Ansprüche 1-3, **dadurch gekennzeichnet, dass** das Verfahren des Weiteren einen Schritt des Aktivierens (S150) einer Funktionalität der Mobilstation gleichzeitig mit dem - oder nach dem - Schritt des Sendens (S130) eines Signals an das Dienste-Zentrum umfasst.

5. Verfahren nach Anspruch 4, **dadurch gekennzeichnet, dass** die aktivierte Funktionalität ein ankommender Ruf ist.

6. Verfahren nach Anspruch 4, **dadurch gekennzeichnet, dass** die aktivierte Funktionalität eine Bild- und/oder Tonaufzeichnungsfunktionalität ist.

7. Verfahren nach Anspruch 4, 5 oder 6, **dadurch gekennzeichnet, dass** der Schritt des Anwendens einen Schritt des Sendens (S160) - von dem Dienste-Zentrum zu der Mobilstation - eines Antwortsignals in Antwort auf das Anforderungssignal umfasst, wobei der Aktivierungsschritt bei Empfang des Antwortsignals ausgelöst wird (S150).

8. Verfahren nach einem der Ansprüche 1-7, **dadurch gekennzeichnet, dass** das Verfahren des Weiteren einen Schritt des Konfigurierens (S30) einer Direktfunktionstaste oder einer abkürzenden Tastenkombination zum Aktivieren der Nutzeraufforderung zum Senden des Signals, welches das Dienste-Zentrum anfordert, umfasst.

9. Verfahren nach einem der Ansprüche 1-8, **dadurch gekennzeichnet, dass** das Verfahren des Weiteren folgende Schritte umfasst:
- Konfigurieren (S40) von Diensten des Dienste-Zentrums von der Mobilstation aus; und
- Senden (S40) eines entsprechenden Signals, das mindestens einen Identifikator für die Mobilstation und Informationen über Dienste-Optionen umfasst.

10. Verfahren nach einem der Ansprüche 1-9, **dadurch gekennzeichnet, dass** das Verfahren des Weiteren einen Schritt, vor dem Schritt des Sendens des Anforderungssignals, umfasst, dem Nutzer das Senden des Anforderungssignal vorzuschlagen (S100), falls der Verlust:
- von Signalen von dem digitalen Mobilkommunikationsnetz;
- von Signalen von dem Satelliten-Positionsbestimmungssystem; oder
- der Verbindung zum Empfänger
detektiert wird (S80), wobei die Nutzeraufforderung beim Schritt des Sendens des Anforderungssignals dann das Akzeptieren des Vorschlags darstellt.

11. Verfahren nach einem der Ansprüche 1-10, **dadurch gekennzeichnet, dass** das Verfahren des Weiteren, vor dem Schritt des Sendens des Anforderungssignals, folgende Schritte umfasst:
- Berechnen (S70) einer Entfernungsabweichung aus gespeicherten Positionsbestimmungsdaten und Bezugs-Positionsbestimmungsdaten; und
- Vorschlagen (S90) - an den Nutzer - des Sendens des Anforderungssignals, wenn die Abweichung einen Schwellenwert übersteigt, wobei die Nutzeraufforderung beim Schritt des Sendens des Anforderungssignals dann das Akzeptieren des Vorschlags darstellt.

12. Verfahren nach einem der Ansprüche 1-11, **dadurch gekennzeichnet, dass** das Verfahren des Weiteren folgenden Schritt umfasst:
- Validieren (S30) einer Frequenzparametrisierung für das Verbinden mit dem Empfänger.

13. Verfahren zum Verwalten von Dienstanforderungen über eine Mobilstation eines digitalen Mobilkommunikationsnetzes, wobei das Verfahren die folgenden Schritte umfasst:
- Einrichten (S50) einer Funkstrecke von der Mobilstation zu einem Empfänger, wobei der Empfänger sich außerhalb der Mobilstation befindet und Signale von einem Satelliten-Positionsbestimmungssystem empfängt;
- Speichern (S60) - in der Mobilstation - von Positionsbestimmungsdaten, die aus den Signalen gewonnen werden, die von dem Satelliten-Positionsbestimmungssystem kommend empfangen wurden;
wobei die Schritte des Verbindens und Speicherns ausgeführt werden, während es der Mobilstation gestattet wird, abgehende Rufe zu generieren und ankommende Rufe zu empfangen, wobei das Verfahren des Weiteren die folgenden Schritte umfasst:
- Senden (S130) - von der Mobilstation über das digitale Mobilkommunikationsnetz - eines Anforderungssignals an ein Dienste-Zentrum auf Aufforderung des Nutzers,
wobei das Signal Folgendes umfasst:
- einen Identifikator der Mobilstation; und
- eine Auswahl der Positionsbestimmungsdaten, die vor der Aufforderung des Nutzers gespeichert wurden,
- Empfangen (S160) eines Antwortsignals, das von dem Dienste-Zentrum in Antwort auf das Anforderungssignal gesendet wurde.

14. Mobilstationsanwendung, die dafür geeignet ist, in einer Mobilstation installiert zu werden, und dafür ausgelegt ist, die folgenden Schritte auszuführen:
- Verbinden (S50) von der Mobilstation mit einem Empfänger, der dafür geeignet ist, Signale von einem Satelliten-Positionsbestimmungssystem zu empfangen;
- Speichern (S60) - in der Mobilstation - von Positionsbestimmungsdaten, die aus den Signalen gewonnen werden, die von dem Satelliten-Positionsbestimmungssystem kommend empfangen wurden;
wobei die Schritte des Verbindens und Speicherns ausgeführt werden, während es der Mobilstation gestattet wird, abgehende Rufe zu generieren und ankommende Rufe zu empfangen,
- Senden (S130) - von der Mobilstation über das digitale Mobilkommunikationsnetz - eines Anforderungssignals an ein Dienste-Zentrum auf Aufforderung des Nutzers,
wobei das Anforderungssignal Folgendes umfasst:
- einen Identifikator der Mobilstation; und
- eine Auswahl der Positionsbestimmungsdaten, die vor der Aufforderung des Nutzers gespeichert wurden,
- Empfangen (S160) eines Antwortsignals, das von dem Dienste-Zentrum in Antwort auf das Anforderungssignal gesendet wurde.

15. Mobilstation, die eine Mobilstationsanwendung nach Anspruch 14 umfasst.

## Revendications

1. Procédé de gestion de requêtes de service par le biais d'une station mobile d'un réseau de télécommunication mobile numérique, comprenant les étapes consistant à :
- se connecter (S50) par le biais de ladite station mobile à un récepteur adapté à recevoir des signaux d'un système de positionnement par satellite ;
- stocker (S60) sur la station mobile des données de positionnement obtenues à partir desdits signaux reçus du système de positionnement par satellite ;
dans lequel les étapes consistant à se connecter et stocker sont effectuées tout en permettant à ladite station mobile d'émettre des appels sortants et de recevoir des appels entrants,
le procédé comprenant en outre les étapes consistant à :
- envoyer (S130) à partir de ladite station mobile par le biais dudit réseau de télécommunication mobile numérique, un signal de requête à un centre de service, sur requête de l'utilisateur, ledit signal de requête comprenant :
- un identifiant de la station mobile ; et
- une sélection desdites données de positionnement stockées préalablement à la requête de l'utilisateur, et
- déployer (S140 - 170) à partir dudit centre de service, un service prédéfini automatisé lors de la réception du signal de requête.

2. Procédé selon la revendication 1, dans lequel ladite station mobile comprend ledit récepteur.

3. Procédé selon la revendication 1, dans lequel l'étape consistant à se connecter audit récepteur comprend l'établissement d'une liaison radioélectrique avec ledit récepteur, ledit récepteur étant externe à ladite station mobile.

4. Procédé selon l'une quelconque des revendications 1 à 3, **caractérisé en ce que** le procédé comprend en outre une étape consistant à activer (S150) une fonctionnalité de ladite station mobile, en même temps que, ou ultérieurement à ladite étape consistant à envoyer (S130) un signal audit centre de service.

5. Procédé selon la revendication 4, **caractérisé en ce que** la fonctionnalité activée est un appel entrant.

6. Procédé selon la revendication 4, **caractérisé en ce que** la fonctionnalité activée est une fonctionnalité d'enregistrement d'image et/ou de son.

7. Procédé selon la revendication 4, 5 ou 6, **caractérisé en ce que** l'étape consistant à déployer comprend une étape consistant à envoyer (S160) à partir du centre de service vers la station mobile, un signal de réponse en réponse audit signal de requête, l'étape d'activation étant déclenchée (S150) à réception dudit signal de réponse.

8. Procédé selon l'une quelconque des revendications 1 à 7, **caractérisé en ce que** le procédé comprend en outre une étape consistant à configurer (S30) une touche d'accès rapide ou raccourci destinée à activer ladite requête d'utilisateur pour l'envoi du signal de requête du centre de service.

9. Procédé selon l'une quelconque des revendications 1 à 8, **caractérisé en ce que** le procédé comprend en outre les étapes consistant à :
- configurer (S40) des services du centre de service à partir de la station mobile ; et
- envoyer (S40) un signal correspondant comprenant au moins un identifiant pour la station mobile et des informations concernant des options de service.

10. Procédé selon l'une quelconque des revendications 1 à 9, **caractérisé en ce que** le procédé comprend en outre une étape, préalable à l'étape d'envoi dudit signal de requête, consistant à suggérer (S100) à l'utilisateur, l'envoi dudit signal de requête, dans le cas d'une détection (S80) d'une perte de :
- signaux provenant du réseau de télécommunication mobile numérique ;
- signaux provenant dudit système de positionnement par satellite ; ou
- connexion au récepteur,
la requête d'utilisateur à l'étape consistant à envoyer ledit signal de requête, étant alors une acceptation de la suggestion.

11. Procédé selon l'une quelconque des revendications 1 à 10, **caractérisé en ce que** le procédé comprend en outre les étapes, préalables à l'étape consistant à envoyer ledit signal de requête, consistant à :
- calculer (S70) un écart de distance par rapport à des données de positionnement stockées et des données de positionnement de référence ; et
- suggérer (S90) à l'utilisateur d'envoyer ledit signal de requête, si ledit écart dépasse une valeur seuil, la requête d'utilisateur au niveau de l'étape consistant à envoyer ledit signal de requête, étant alors une acceptation de la suggestion.

12. Procédé selon l'une quelconque des revendications 1 à 11, **caractérisé en ce que** le procédé comprend en outre une étape consistant à :
- valider (S30) un paramétrage de fréquences de connexion au récepteur.

13. Procédé de gestion de requêtes de service par le biais d'une station mobile d'un réseau de télécommunication mobile numérique, comprenant les étapes consistant à :
- établir (S50) une liaison radioélectrique à partir de ladite station mobile avec un récepteur, ledit récepteur étant externe à ladite station mobile et recevant des signaux à partir de données de système de positionnement par satellite ;
- stocker (S60) dans ladite station mobile des données de positionnement obtenues à partir desdits signaux reçus du système de positionnement par satellite ;
dans lequel les étapes consistant à se connecter et stocker sont réalisées tout en permettant à ladite station mobile d'émettre des appels sortants et de recevoir des appels entrants, le procédé comprenant en outre les étapes consistant à :
- envoyer (S130) à partir de ladite station mobile par le biais du réseau de télécommunication mobile numérique, un signal de requête à un centre de service, sur requête de l'utilisateur,
dans laquelle ledit signal comprend :
- un identifiant de la station mobile ; et
- une sélection desdites données de positionnement stockées préalablement à la requête de l'utilisateur,
- recevoir (S160) un signal de réponse envoyé à partir du centre de service en réponse audit signal de requête.

14. Application de station mobile adaptée à être installée dans une station mobile et conçue pour effectuer les étapes consistant à :
- se connecter (S50) à partir de ladite station mobile à un récepteur adapté pour recevoir des signaux d'un système de positionnement par satellite ;
- stocker (S60) dans ladite station mobile des données de positionnement obtenues à partir desdits signaux du système de positionnement par satellite ;
dans laquelle les étapes consistant à se connecter et stocker sont effectuées tout en permettant à ladite station mobile d'émettre des appels sortants et de recevoir des appels entrant,
- envoyer (S130) à partir de ladite station mobile, par le biais dudit réseau de télécommunication mobile numérique un signal de requête à un centre de service, sur requête de l'utilisateur, ledit signal de requête comprenant :
- un identifiant de la station mobile ; et
- une sélection desdites données de positionnement stockée préalablement à la requête de l'utilisateur,
- recevoir (S160) un signal de réponse envoyé à partir du centre de service en réponse audit signal de requête.

15. Station mobile comprenant une application de station mobile selon la revendication 14.
